(19) Europäisches Patentamt / European Patent Office / Office européen des brevets

(11) **EP 4 396 534 B1**

(12) **EUROPEAN PATENT SPECIFICATION**

(45) Date of publication and mention
of the grant of the patent:
**26.03.2025  Bulletin 2025/13**

(21) Application number: **22840382.0**

(22) Date of filing: **17.11.2022**

(51) International Patent Classification (IPC):
**G01C 21/32** *(2006.01)*   **G01C 21/00** *(2006.01)*
**G06F 16/29** *(2019.01)*

(52) Cooperative Patent Classification (CPC):
**G01C 21/3804; G01C 21/32; G01C 21/3841;
G06F 16/29**

(86) International application number:
**PCT/US2022/050269**

(87) International publication number:
**WO 2024/107196 (23.05.2024 Gazette 2024/21)**

(54) **SYSTEM AND METHOD FOR ESTIMATING THE CONTINUED EXISTENCE OF REAL-WORLD MAP FEATURES BASED ON DISTRIBUTED VEHICULAR OBSERVATIONS IN A PRIVACY-PRESERVING MANNER**

SYSTEM UND VERFAHREN ZUR SCHÄTZUNG DER KONTINUIERLICHEN EXISTENZ VON KARTENMERKMALEN DER REALEN WELT AUF DER BASIS VERTEILTER FAHRZEUGBEOBACHTUNGEN AUF DATENSCHUTZWAHRENDE WEISE

SYSTÈME ET PROCÉDÉ D'ESTIMATION DE L'EXISTENCE CONTINUE DE CARACTÉRISTIQUES CARTOGRAPHIQUES DU MONDE RÉEL SUR LA BASE D'OBSERVATIONS DE VÉHICULE DISTRIBUÉES DANS LE RESPECT DE LA CONFIDENTIALITÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**10.07.2024  Bulletin 2024/28**

(73) Proprietor: **GOOGLE LLC
Mountain View CA 94043 (US)**

(72) Inventors:
• **RUSSELL, Stephen Paul
California 94043 (US)**
• **LINGENFELTER, Daniel John
California 94043 (US)**

(74) Representative: **Chettle, John Edward
Venner Shipley LLP
200 Aldersgate
London EC1A 4HD (GB)**

(56) References cited:
**EP-A1- 3 628 085        EP-B1- 3 628 085
WO-A1-2020/118545    US-A1- 2019 051 153
US-A1- 2020 191 591**

## Description

The present disclosure relates generally to generating map data for a navigation service. More particularly, the present disclosure relates to estimating the continued existence of features in the real-world based on distributed vehicular observations.

## BACKGROUND

As computer technology has improved, the number and type of services that can be provided to users have increased dramatically. The services provided via computer technology include navigation services. A navigation service can allow a user to navigate from a current position to a destination position. The user can submit a destination (e.g., an address) through an application associated with a navigation service. The navigation service can, using map data for a geographic area, generate a planned route to the destination. In some examples, the planned route includes one or more turn-by-turn navigation directions. To provide efficient and accurate routes, the navigation system requires up to date information about the state of a geographic area with features that may change over time. US 2020/191591 A1 discloses a method, a system, and a computer program product for updating a map database to indicate presence status of a road sign.
WO 2020/118545 A1 discloses a time-aware occupancy mapping using regression to unknown ( "RTU" ) analysis, and an apparatus to dynamically allocate occupancy probability to a cell in an environment to thereby form a time-aware occupancy map of the environment. US 2019/051153 A1 discloses an apparatus and method for updating a geographic database based on road object probabilities.

## SUMMARY

Aspects and advantages of embodiments of the present disclosure will be set forth in part in the following description, or can be learned from the description, or can be learned through practice of the embodiments.
An example aspect is directed towards a computer-implemented method. The method comprises accessing, by a computing system with one or more associated processors, a plurality of data records representing instances in which the map feature is observed. The method further comprises determining, by the computing system, a frequency at which the map feature is observed based on the plurality of data records representing instances in which the map feature is observed. The method further comprises determining, by the computing system, an elapsed time between a most recent instance in which the map feature was observed and a current time. The method further comprises estimating, by the computing system, a likelihood that the map feature currently exists in the real world based, at least in part, on the frequency and the elapsed time. The method further comprises determining, by the computing system, that the likelihood that the map feature currently exists is below a predetermined likelihood threshold. The method further comprises altering, by the computing system, geographic map data to remove the map feature.
Another example aspect of the present disclosure is directed to a computing system. The computing system comprises one or more processors; and a computer-readable memory. The computer-readable memory stores instructions that, when executed by the one or more processors cause the system to perform operations comprising accessing a plurality of data records representing instances in which a map feature is observed. The operations further comprise determining a frequency at which the map feature is observed based on the plurality of data records representing instances in which the map feature is observed. The operations further comprise determining an elapsed time between a most recent instance in which the map feature was observed and a current time. The operations further comprise estimating a likelihood that the map feature currently exists in the real world based, at least in part, on the frequency and the elapsed time. The operations further comprise determining that the likelihood that the map feature currently exists is below a predetermined likelihood threshold. The operations further comprise altering geographic map data to remove the map feature.
Another example aspect of the present disclosure is directed towards a computer-readable medium storing instructions. The instructions, when executed by one or more computing devices, cause the device to perform operations comprising accessing a plurality of data records representing instances in which a map feature is observed. The operations further comprise determining a frequency at which the map feature is observed based on the plurality of data records representing instances in which the map feature is observed. The operations further comprise determining an elapsed time between a most recent instance in which the map feature was observed and a current time. The operations further comprise estimating a likelihood that the map feature currently exists in the real world based, at least in part, on the frequency and the elapsed time. The operations further comprise determining that the likelihood that the map feature currently exists is below a predetermined likelihood threshold. The operations further comprise altering geographic map data to remove the map feature.
Other aspects of the present disclosure are directed to various systems, apparatuses, non-transitory computer-readable media, user interfaces, and electric devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

BRIEF DESCRIPTION OF THE DRAWINGS

Detailed discussion of embodiments directed to one of ordinary skill in the art is set forth in the specification, which makes reference to the appended figures, in which:

FIG. 1 depicts an example computing system according to example embodiments of the present disclosure;
FIG. 2 depicts an example client-server environment according to example embodiments of the present disclosure;
FIG. 3 depicts an example mapping system according to example embodiments of the present disclosure;
FIG. 4 depicts a block diagram of a model for estimating the likelihood that a particular feature in geographic map data still exists according to example embodiments of the present disclosure; and
FIG. 5 depicts an example flow diagram for a method of estimating the likelihood that a feature continues to exist according to example embodiments of the present disclosure.

DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made to the present disclosure without departing from the scope disclosure. For instance, features illustrated or described as part of one embodiment can be used with another embodiment to yield a still further embodiment. Thus, it is intended that the present disclosure covers such modifications and variations as come within the scope of the appended claims.

Generally, the present disclosure is directed to a mapping system for estimating the existence of map features based on distributed vehicle observations in a privacy-preserving manner. In particular, examples described in the present disclosure recite a mapping system for maintaining geographic map data for use in a navigation application. In some examples, the mapping system can use information submitted by users who explicitly agreed to provide the information (e.g., sensor data captured by computing systems integrated into vehicles) to update the current state of real-world locations and features. For example, some features of the real world may be temporary such as construction zones or signs that get updated or replaced. **In** some examples, the mapping system can receive data indicating that one or more features have been observed. These observations can also include periods of time in which no observations are transmitted to the mapping system. During a period in which no observations have been received for a respective feature, the mapping system can use information about the times at which the respective features were previously observed to estimate the likelihood that the respective feature is currently still in existence.

To enable the mapping system to accurately make this likelihood estimation, the mapping system (or a related system) can record a plurality of instances in which a particular feature is observed. In some examples, the mapping system can record these instances without storing the specific user or system that recorded them. In this way, the frequency with which the feature was observed can be separated from the specific users who have observed them, thus maintaining privacy. The mapping system can model the observation frequency as a Poisson process. Based on the frequency at which the feature has been observed and the time since the last observation, the mapping system can use Bayes' rule to estimate the likelihood that the feature still exists given the time since the last observation. Other methods of estimating likelihood can also be used. In some examples, once the estimated likelihood that the feature still exists dips below a predetermined threshold, the geographic map data can be updated to remove, hide, de-emphasize, or otherwise reduce the visibility of the feature.

In a specific example, map data associated with a mapping system can include or reflect a pylon that is blocking a lane during construction. Users (via computing systems associated with vehicles or other computing systems) can submit reports of observing the pylon based on an analysis of the sensor data captured by the computing system. Based on the observation reports, the mapping system can calculate an observation frequency twice a week over a period of two months. A week has passed since an observation report submitted by a vehicle included the pylon. The mapping system can generate an estimate representing the likelihood that that pylon is still at its location. As the time since the last observation report of the pylon increases, the lower the likelihood that the pylon still exists at its previous location. Once the likelihood of the pylon still existing at the location drops below a predetermined threshold, the mapping system can remove (or hide) the pylon from the geographic map data. Thus, users of the geographic map data will no longer be shown the pylon as existing in the lane as it previously was, and users can make different choices about their navigation route. Similarly, a navigation system that generates routes for users based on the geographic map data can generate routes without reference to the pylon (e.g., the routes can pass through the lane that was previously blocked by the pylon).

More generally, a mapping system can be included in a server computing system that provides navigational services. A server computing system can be any computing system configured to communicate with a user computing device (or other computing devices) over a network to provide a service. A user computing device can be any computing device that is designed to be operated by an end-user. For example, a user computing device can include, but is not limited to, a personal computer, a smartphone, a smartwatch, a fitness band, a tablet computer, a laptop computer, a navigation computing device, a wearable computing device, a computing device integrated into a vehicle, and so on. In some examples, a user computing device can include one or more sensors intended to gather information, with the permission of the user, such as location information.

A navigation application can be any application configured to provide navigation information to a user upon request. For example, a navigation application can provide turn-by-turn directions from starting location to an ending location. A navigation application can also allow a user to search for particular points of interest in a geographic location. For example, a user can submit a query (e.g., using keywords) to the navigation application along with a specific geographic location. In response to the received query, the navigation application can provide geographic map data (e.g., a map) associated with the query.

The server computing system that provides services for a navigation application can receive a navigation request from a user computing device. In some examples, the navigation request can include a destination. In some examples, the navigation request can also include an origination point. The origination point can be the current location of the user computing device (e.g., as determined by a global positioning system). The response to a navigation request can also include geographic map data for display to the user. In some examples, the geographic map data can include a plurality of features, each feature representing an object, location, point of interest, and/or traffic flow information (e.g., lanes, crosswalks, and so on).

In some examples, the map data can be used to generate navigation instructions. As such, it is important that the features included in the map represent an accurate depiction of the features (e.g., buildings, objects, and so on) that are currently in the real world. One method of determining the specific objects that are in the real world can be to communicate with computing systems within vehicles that have sensors that can be used to identify features in the area around the vehicle (e.g., cameras, LIDAR sensors, and so on). Such computing systems can analyze the sensor data produced by those sensors to generate lists of objects and features in the area around the vehicle. With the consent of the user, the computing system within the vehicle can transmit a list of observed objects (e.g., an observation report) back to a mapping system associated with the navigation system.

When the navigation system receives object data it can first anonymize the data. Anonymizing the data includes removing any information that could identify a user or the vehicle from which it is received. Each instance in which a feature is observed in the real world can be stored as an anonymized data record. In some examples, when an object is initially observed it can be added to the geographic map data. Thus, users viewing the map data (e.g., in an application associated with the navigation system) can see the feature, and the navigation system can take the feature into account when generating navigational routes.

In some examples, features included in the map data can be temporary. As a result, information about the features and their continued existence can be analyzed to determine whether the feature should remain in the map data or should be removed. In some examples, the server system can receive object data from vehicles associated with users. Each time the feature is observed, the mapping system's confidence that the feature still exists reset to a very high value (the time elapsed from the last observation is very low). Other sources of information, such as raw images provided by Street View vehicles accessible to the mapping system can be directly analyzed to determine that the feature still exists. If raw image data is unavailable, the mapping system can use the amount of time between observations to estimate the likelihood that the feature still exists. By using the amount of time between observations as a method to estimate the likelihood that the feature still exists, the geographic map database may be maintained in an up-to-date state in the absence of direct observation of features. This allows the geographic map database to remain accurate in an efficient manner.

In some examples, the mapping system can analyze the past instances of observations of the feature (e.g., based on data records associated with observations) to determine the frequency at which observations of the feature have been received. In some examples, for data received from vehicles associated with users, the data can be anonymized before it is analyzed. In some examples, the observation reports can be initially stored in a log or log cluster. The observation reports can be stripped of identifying information. The observation reports can only be used by the mapping system when the observation reports are sufficiently anonymized.

Thus, information about the specific user or vehicle the observation was received from can be removed. Furthermore, the mapping system can ensure that no specific observation instance data is retained. For example, each time an observation is determined, the estimated average frequency can be updated, and the specific instance data can be removed. In this way, the total number of times that the feature has been observed is not stored and the date of any particular observation is not stored. Removing this information from storage can enable greater user privacy.

The frequency at which the feature is observed can be used by the server computing system to estimate the likelihood of the feature still existing during periods in which no observations are received. For example, if the feature is observed at an average rate of roughly three times per week, and the last observation was seven days ago, the server computing system can estimate the likelihood that the feature still exists despite having no observations in seven days.

To do so, the frequency data can be modeled as a Poisson process. The probability P that the time to the next observation ($T_n$) will be greater than the elapsed time, assuming that the feature still exists, can be calculated by the following formula:

$$P(T_n > t|E) = e^{-\lambda t}$$

where $\lambda$ is the estimated average observation rate and t is the time since the last observation occurred. This probability can be used along with Bayes rule to estimate the likelihood that the feature still exists as follows:

$$P(E|T_n > t) = \frac{P(T_n > t|E)P(E)}{P(T_n > t)}$$

$$= \frac{P(T_n > t|E)P(E)}{P(T_n > t|E)P(E) + P(T_n > t|\overline{E})P(\overline{E})}$$

$$\text{noting that } P(T_n > t|\overline{E}) = 1 \text{ and } P(\overline{E}) = 1 - P(E)$$

$$= \frac{P(T_n > t|E)P(E)}{P(T_n > t|E)P(E) + (1 - P(E))}$$

$$= \frac{e^{-\lambda t}P(E)}{e^{-\lambda t}P(E) + (1 - P(E))}$$

wherein the E represents the feature still exists in the real-world, $\overline{E}$ then represents the feature no longer existing in the real-world, t represents the time elapsed since the last observation, and $T_n$ is the time to the next observation.

In some examples, the estimated likelihood value can be compared against the threshold likelihood value. If the estimated likelihood value is determined to be below the threshold likelihood value, the geographic map can be altered to remove the feature. When a feature is removed from the geographic map data, it is no longer visible to users who view that map data and will not be considered when generating navigation routes. However, the feature data can be retained with a very low probability. In this way, if the feature is observed again, the previous feature data can be used to quickly reinstate the feature into the geographic map data.

For example, each feature can have an associated feature ID and can be stored in a feature record, each record listing the characteristics of the feature. For example, if the feature is a sign, the feature record can include a location of the feature, its dimensions, the color of the sign, and any information on the sign. If a feature has been removed from the live geographic map data and then is observed again (e.g., the feature was obstructed for a long time), the server computing system can match the observed feature to the existing record and the feature can retain the same feature ID and characteristics.

The systems and methods of the present disclosure ensure that geographic map data is maintained up-to-date, even in the absence of direct observation of temporary features. By removing temporary features proactively as described above, subsequently generated navigation instructions are improved as optimal routes may be provided that do not need to unnecessarily account for features that, in fact, are no longer present in the real world.

The systems and methods of the present disclosure provide a number of technical effects and benefits. As one example, the proposed systems can provide for automatically updating geographic map data without the need for additional observations. Automatically updating geographic map data can enable a navigation application to provide more efficient navigation services to a user with reduced time and expenditure. Improving the effectiveness of navigation applications can reduce the amount of storage needed and energy used when providing navigation information. Further, a more efficient navigation service can provide faster and/or more fuel-efficient routes for the user. Reducing the amount of storage needed and energy used reduces the cost of the navigation service associated with the navigation application and improves the user experience. This represents an improvement in the functioning of the device itself.

With reference now to the Figures, example embodiments of the present disclosure will be discussed in further detail.

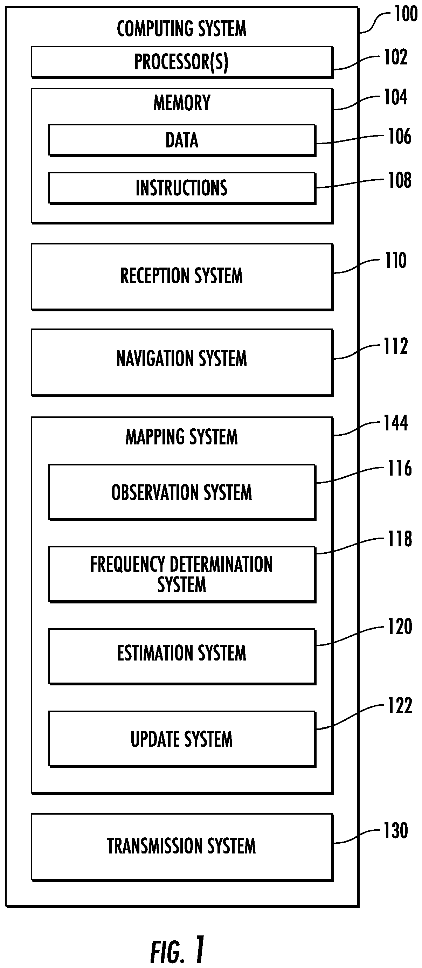

FIG. 1 depicts an example computing system 100 according to example embodiments of the present disclosure. In some example embodiments, the computing system 100 can be any suitable device, including, but not limited to, a server computing system, a personal computer, or any other computing system that is configured such that it can provide navigation services to user computing devices and keep geographic map data up to date. The computing system 100 can include one or more processor(s) 102, memory 104, a reception system 110, a navigation system 112, a mapping system 114, and a transmission system 130.

The one or more processor(s) 102 can be any suitable processing device, such as a microprocessor, microcontroller, integrated circuit, or other suitable processing device. The memory 104 can include any suitable computing system or media, including, but not limited to, non-transitory computer-readable media, RAM, ROM, hard drives, flash drives, or other memory devices. The memory 104 can store information accessible by the one or more processor(s) 102, including instructions 108 that can be executed by the one or more processor(s) 102. The instructions can be any set of instructions that when executed by the one or more processor(s) 102, cause the one or more processor(s) 102 to provide the desired functionality.

In particular, in some devices, memory 104 can store instructions for implementing the reception system 110, the navigation system 112, the mapping system 114, and the transmission system 130. The computing system 100 can implement the reception system 110, the navigation system 112, the mapping system 114, and the transmission system 130 to execute aspects of the present disclosure, including generating navigation data, updating map data, and estimating the likelihood that a particular feature in the map data still exists.

It will be appreciated that the terms "system" or "engine" can refer to specialized hardware, computer logic that executes on a more general processor, or some combination thereof. Thus, a system or engine can be implemented in hardware, application specific circuits, firmware, and/or software controlling a general-purpose processor. In one embodiment, the systems can be implemented as program code files stored on a storage device, loaded into memory and executed by a processor or can be provided from computer program products, for example computer executable instructions, that are stored in a tangible computer-readable storage medium such as RAM, hard disk, or optical or magnetic media.

Memory 104 can also include data 106, such as map data associated with the navigation system 112 (e.g., data representing a geographic area including one or more roads and one or locations of interest received from a server system), that can be retrieved, manipulated, created, or stored by the one or more processor(s) 102. In some example embodiments, such data can be transmitted to the user computing system as needed.

In some example embodiments, the computing system 100 includes the reception system 110, the navigation system 112, the mapping system 114, and the transmission system 130.

The reception system 110 can receive data from remote computing systems. In some examples, the reception system 110 can receive a navigation request from a user computing device. The navigation request can indicate a requested initial point and a destination. The reception system 110 can transmit the navigation request to the navigation system 112.

In some examples, the reception system 110 can receive object detection data from one or more user computing systems. For example, vehicles can be equipped with navigation systems that capture imagery of the area around the vehicle. The navigation system can analyze the image data to identify one or more objects or features in the area around the vehicle. If the user agrees, the vehicle can then automatically transmit a list of objects detected, as well as the location at which each object in the list of objects was detected and the time it was observed, to the computing system 100 for use by the mapping system 114.

The navigation system 112 can provide (e.g., transmit to a user computing device) a visual depiction of a geographic area based on stored geographic map data. The visual depiction of the geographic area can include one or more features. The features can include roads or other pathways, one or more points of interest (including buildings, landmarks, and so on), one or more objects (e.g., signs, obstacles, and so on), and a highlighted depiction of a planned route. In some examples, the navigation system 112 can also provide location-based search options to identify one or more searchable points of interest within a given geographic area. In some examples, the navigation system 112 can transmit the visual depiction of a geographic area based on stored geographic data to a user computing device for display to a user in response to a received request.

The navigation system 112 can, in response to a navigation request, generate a plurality of candidate routes from the current location to the destination. A candidate route can include a set of step-by-step directions from a point of origin to a destination included in the navigation request. For example, a user can transmit a destination location (e.g., an address) with the navigation request. In response, the navigation system can, using geographic feature data for a specific geographic area, provide navigation information allowing the user to navigate to the destination location.

The navigation information can include turn-by-turn directions from a current location (or a provided location) to the destination location. The navigation system 112 can select from a plurality of possible routes from the current location to the destination location based on one or more criteria.

The navigation system 112 can use geographic map data generated by the mapping system 114 to generate navigation routes. The mapping system 114 can include an observation system 116, a frequency determination system 118, an estimation system 120, and an update system 122.

In some examples, the observation system 116 can determine when one or more features in the geographic map data are observed. In some examples, observations can include object recognition data received from vehicles that have agreed to share data associated with objects identified in their local area. If so, the observation system 116 can remove user identifying information from the records of the observation. In some examples, the observation data is stored in a series of records and the observation system 116 can access those records to determine when a feature in the geographic map data has been observed. In some examples, observation data can be stored in a log initially until the specific observation reports have been stripped of user identifying information to protect user privacy.

In some examples, the observation system 116 can access raw image data collected by one or more vehicles associated with the computing system 100 itself. In this case, the observation system 116 can analyze the raw image data to determine specific times and places in which particular features are observed.

In some examples, the frequency determination system 118 can determine a frequency at which a particular feature in the geographic mapping data is observed. For example, the frequency determination system 118 can access information produced by the observation system 116 to determine how many times a particular object has been observed over a period of time.

The number of observations can be divided by the total amount of time in the period of time (e.g., the time between the first observation and the most recent observation) to determine a frequency at which the object is observed. For example, if a respective feature (e.g., a construction sign) has been detected 12 times in the last month, the frequency determination system 118 can determine that the feature is observed about three times a week on average. In some examples, when new observations are received, the frequency determination system 118 can update the frequency at which the object is observed. Specific instances in which the object is observed may not be stored to ensure that the privacy of users is maintained. Thus, each specific observation record can be discarded once it has been used to update the estimated average observation frequency value.

In some examples, the calculation of the frequency at which observations are received can be done with observation records stored inside a record cluster. The mapping system 114 and the navigation system 112 do not have direct access to the records inside the log cluster. As a result, the frequency at which observations are received can be updated as new observations are received without the mapping system 114 or navigation system 112 having knowledge of how many observations have occurred or when they have occurred. In some examples, observation records can be discarded from the log cluster after a predetermined window of time.

The estimation system 120 can determine an estimated likelihood that a respective feature still exists based on the length of time in which it has no longer been observed and the frequency at which it was observed. For example, if the respective feature has been observed twice a day for three months, and has not been observed for over a week, the likelihood that it no longer exists is increased.

To accurately perform this estimation, the frequency data can be modeled as a Poisson process. The probability P that the time to the next observation will be greater than the elapsed time if the feature still exists (E) can be calculated by the following formula:

$$P(T_n > t|E) = e^{-\lambda t}$$

where $\lambda$ is the estimated average observation rate and t is the time since the last observation occurred. The estimated average observation rate (e.g., the frequency associated with observation reports) can be calculated as:

$$\lambda = \frac{\text{number of observations}}{t_f - t_0}$$

Where $t_f$ represents the last observed time and $t_0$ represents the first observed time. The properties of the Poisson process (see above) can be used along with Bayes rule to estimate the likelihood that the feature still exists as follows:

$$P(E|T_n > t) = \frac{P(T_n > t|E)P(E)}{P(T_n > t)}$$

In this example, E represents the feature still existing in the real world. $P(E|T_n > t)$ then represents the probability that the feature still exists in the real world given a time $t$ since the last observation of the feature. $P(T_n > t|E)$ can represent the likelihood that the time until the next observation ($T_n$) is greater than the elapsed time since the last observation (t) assuming that the feature still exists. P(E) is the prior probability that the feature exists in the world.

$$P(E|T_n > t) = \frac{P(T_n > t|E)P(E)}{P(T_n > t|E)P(E) + P(T_n > t|\overline{E})P(\overline{E})}$$

In this step, $P(T_n > t)$, the probability that the time until the next observation is greater than the elapsed time, can be separated into its two components, the first component $P(T_n > t|E)P(E)$ representing the probability that the time to the next observation ($T_n$) is greater than the currently elapsed time (t) given that E still exists (multiplied by the probability P(E)). The second component $P(T_n > t|\overline{E})P(\overline{E})$ is the probability that the time to the next observation ($T_n$) is greater than the currently elapsed time (t) given that E does not still exist ($\overline{E}$) (multiplied by the probability $P(\overline{E})$). Note that $P(T_n > t|\overline{E}) = 1$ because if E no longer exists the time until the next observation is always greater than the elapsed time (e.g., the feature will never be observed again). Also note that $P(\overline{E}) = 1 - P(E)$. These values can be substituted into the probability formula as follows:

$$P(E|T_n > t) = \frac{P(T_n > t|E)P(E)}{P(T_n > t|E)P(E) + (1 - P(E))}$$

The value of $P(T_n > t|E)$ from above can then be substituted into the formula as follows to arrive at the final probability formula:

$$P(E|T_n > t) = \frac{e^{-\lambda t}P(E)}{e^{-\lambda t}P(E) + (1 - P(E))}$$

Once the estimation system 120 has generated an estimated likelihood value representing the likelihood that the feature still exists, the estimated likelihood value can be compared to a threshold likelihood value. If the estimated likelihood value is determined to be below the threshold likelihood value (e.g., the likelihood that the feature still exists is below a threshold value, such as 5%), the update system 122 can update the geographic map data to remove the feature. When a feature is removed from the geographic map data, the feature is no longer visible to users who view that map data and will not be considered when generating navigation routes.

Thus, if a pylon blocks a lane, the blockage can be represented in the map data when displayed to users. The navigation system 112 can also generate routes that avoid the blocked lane. Once the update system 122 removes the feature from the geographic map data (due to a low likelihood of its continued existence), the feature will no longer be visible in maps displayed to users. Additionally, the navigation system 112 may no longer take the blockage into account when planning navigation routes for users. However, the feature data can be retained in the geographic data store with a very low associated probability. In this way, if the feature is observed again, the previous feature data can be used to quickly reinstate the feature into the geographic map data.

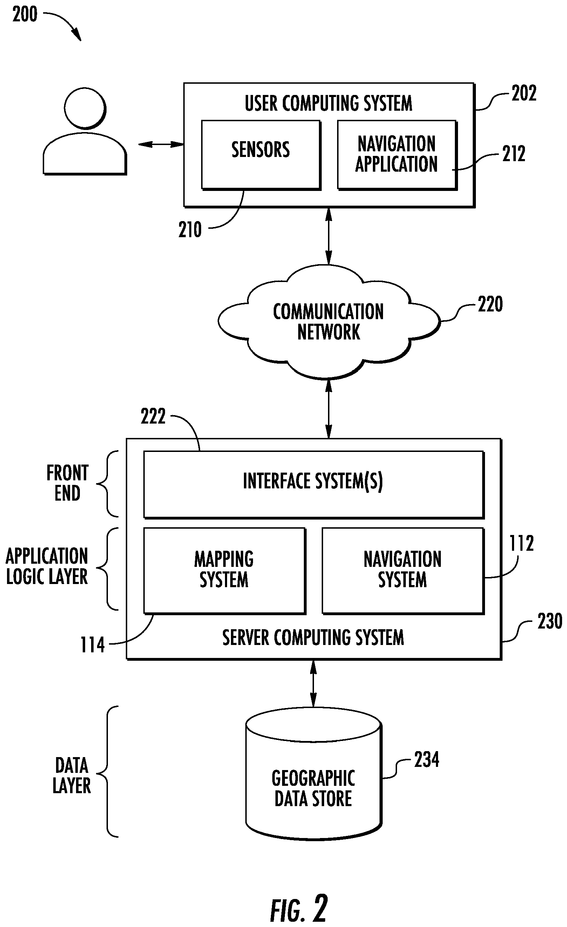

FIG. 2 depicts an example client-server environment 200 according to example embodiments of the present disclosure. The client-server system environment 200 includes one or more user computing devices 202 and a server computing system 230. One or more communication networks 220 can interconnect these components. The one or more communication networks 220 may be any of a variety of network types, including local area networks (LANs), wide area networks (WANs), wireless networks, wired networks, the Internet, personal area networks (PANs), or a combination of such networks.

A user computing device 202 can include, but is not limited to, smartphones, smartwatches, fitness bands, navigation computing devices, laptop computing devices, and embedded computing devices (computing devices integrated into other objects such as clothing, vehicles, or other objects). In some examples, a user computing device 202 can include one or more sensors intended to gather information with the permission of the user associated with the user computing device 202. For example, the one or more sensors can include a camera that captures image data of the surroundings. This image data can be analyzed to identify one or more objects or features. A list of the objects or features can be automatically transmitted to the server computing system 230 as long as the user has previously given permission for the system to do so.

In some examples, the user computing device 202 can connect to another computing device, such as a personal computer (PC), a laptop, a smartphone, a tablet, a mobile phone, an electrical component of a vehicle, or any other electric device capable of communication with the communication network 220. A user computing device 202 can include one or more application(s) such as search applications, communication applications, navigation applications 212, productivity applications, game applications, word processing applications, or any other applications. The application(s) can include a web browser. The user computing device 202 can use a web browser (or other application) to send and receive requests to and from the server computing system 230. The application(s) can include a navigation application 212 that enables the user to send navigation requests to the server computing system 230 and receive navigation information in response.

In some examples, the user computing device 202 can include one or more sensors 210 that can be used to determine information, with the express permission of the user, associated with the environment of the user computing device 202 or information associated with the user of the user computing device 202 (such as the position or movement of the user). In some examples, the sensors 210 can include a motion sensor to detect the movement of the device or the associated user, a location sensor (e.g., a GPS) to determine the current location of the user computing device 202, an audio sensor to gather audio information in the area of the user computing device 202, and/or a camera sensor to capture image data of the surroundings of the user computing device 202.

As shown in FIG. 2, the server computing system 230 can generally be based on a three-tiered architecture, consisting of a front-end layer, application logic layer, and data layer. As is understood by skilled artisans in the relevant computer and Internet-related arts, each component shown in FIG. 2 can represent a set of executable software instructions and the corresponding hardware (e.g., memory and processor) for executing the instructions. To avoid unnecessary detail, various components and engines that are not germane to conveying an understanding of the various examples have been omitted from FIG. 2. However, a skilled artisan will readily recognize that various additional components, systems, and applications may be used with a server computing system 230, such as that illustrated in FIG. 2, to facilitate additional functionality that is not specifically described herein. Furthermore, the various components depicted in FIG. 2 may reside on a single server computer or may be distributed across several server computers in various arrangements. Moreover, although the server computing system 230 is depicted in FIG. 2 as having a three-tiered architecture, the various example embodiments are by no means limited to this architecture.

As shown in FIG. 2, the front end can consist of an interface system(s) 222, which receives communications from one or more user computing devices 202 and communicates appropriate responses to the user computing devices 202. For example, the interface system(s) 222 may receive requests in the form of Hypertext Transfer Protocol (HTTP) requests, or other web-based, application programming interface (API) requests. The user computing devices 202 may be executing conventional web browser applications or applications that have been developed for a specific platform to include any of a wide variety of computing devices and operating systems.

As shown in FIG. 2, the data layer can include a geographic data store 234. The geographic data store 234 can store a variety of navigation data. For example, the geographic data store 234 can include geographic map data. In some examples, the geographic map data can include information describing locations, points of interest, buildings, roads, parks, and other geographic features. In some examples, the map data can include features that may be temporary including but not limited to, signs, construction features, obstructions, and so on. The map data can include information correlating addresses with specific geographic locations such that a user computing device 202 can submit a query with an address and information about that address (e.g., what buildings if any are at that location) can be transmitted to the user computing device 202.

Similarly, a user computing device 202 can submit a query that includes the name of a location or point of interest. In response, the server computing system 230 can identify the address associated with that location. The geographic data store 234 can include information associated with the size of roads and/or lanes, information about the visibility of signs along the route, information smoothness of a particular route, information about changes in elevation along a road, and so on.

In some examples, the geographic data store 234 can include information associated with location-determining systems such as a global positioning system (GPS) such that the location of a specific computing device can be determined with respect to the map data. The geographic data store 234 can include direction data that can allow the navigation system 112 to generate routes between any two locations represented in the map data. In some examples, the geographic data store 234 can include location characteristic information about a plurality of locations. The location characteristic information can include the address of the location, the geographic position of the location, the type of the location, the average amount of people at that location at particular dates and times, the hours of operation of the location, the goods and services available at the location (if any), and so on.

In some examples, the geographic data store 234 can also include image data, the image data associated with one or more geographic areas. The geographic data store 234 can also include satellite image data associated with one or more geographic areas. In some examples, the geographic data store 234 can include information associated with the characteristics of one or more roads or pathways.

The application logic layer can include application data that can provide a broad range of other applications and services that allow users to access or receive geographic data for navigation or other purposes. The application logic layer can include a mapping system 114 and a navigation system 112.

The mapping system 114 can generate and maintain the geographic map data stored in the geographic data store 234. To do so, geographical map data can be provided to the mapping system 114 from one or more sources. For example, existing geographic data can be supplied from mapping services. In addition, human operators can submit map data or alter existing map data to represent the real world more accurately.

In some examples, the mapping system 114 can receive updated information about the geographic environment from vehicles and or computing devices passing through the environment. For example, a vehicle equipped with a camera or lidar sensor can use those sensors to gather data about the environment, identify objects or features within the environment, and automatically transmit the identified features or objects to the mapping system 114. The mapping system 114 can update the geographic map data in the geographic data store 234 based on the information received.

In some examples, the mapping system 114 can update the geographic map data without a specific observation. For example, the mapping system 114 can maintain data indicating how frequently an observation of a particular object or feature is received. Once the frequency of observation is known, it can be used to estimate how it is that the object still exists in the world without having an observation transmitted based on the time since the last observation. In general, as the period of time without an observation increases, the likelihood that the object or feature still exists decreases. In this way, the mapping system 114 can update the geographic map based on the lack of an observation rather than an observation.

For example, a sign indicating that an area is the school zone can be detected at an estimated average observation rate of three times a day. In some examples, the period of time between observations can be above the estimated average observation rate. This may be caused by an object blocking the sign (e.g., a parked car in front of a sign and so on), by reduced traffic on the associated street, or a variety of other causes. The lack of observation may also be a result of the sign being removed. The frequency of the sign observations can be represented as a Poisson process and the Bayes rule can be used to determine the likelihood of the sign still existing given the elapsed time since the last observation.

Once the likelihood has been estimated, the mapping system 114 can compare it to a threshold likelihood value. If the likelihood of the sign still existing drops below the threshold likelihood value, the mapping system on 114 can update the geographic map data to remove the sign from being displayed in the geographic map data. For example, if the likelihood value representing the feature's continued existence drops below 5%, references to the feature in the geographic map data can be removed or hidden.

It should be noted that, rather than discarding the information about the feature (e.g., the sign in this example) entirely, the mapping system 114 may retain that data such that if the sign is observed again the associated data can be quickly added to the geographic map data in the geographic data store 234.

A navigation system 112 can provide, for display at a user computing system, data enabling a visual depiction of a geographic area. The visual depiction of the geographic area can include one or more streets, one or more points of interest (including buildings, landmarks, and so on), and a highlighted depiction of a planned route. The navigation system 112 can receive, via the interface, a navigation request query including an initial location and a target destination. The navigation system 112 can generate a plurality of candidate routes from the initial location to the target destination. The navigation system can select a particular route from the plurality of candidate routes based on one or more factors.

In some examples, the candidate roots can be selected based at least in part on whether or not particular features are determined to still exist within the geographic map data. For example, if a specific road or lane has been blocked by a barrier or pylon, the navigation system 112 can generate routes that avoid the road or lane. If the mapping system 114 determines that the barrier or pylon no longer exists, the navigation system 112 can generate routes that make use of the road or lane again.

The selected route can be transmitted to the user computing device 202 for display to a user and an interface. The user can choose to accept the recommendation or reject it. If the recommendation is accepted, the navigation system 112 can generate directions along the route to the destination.

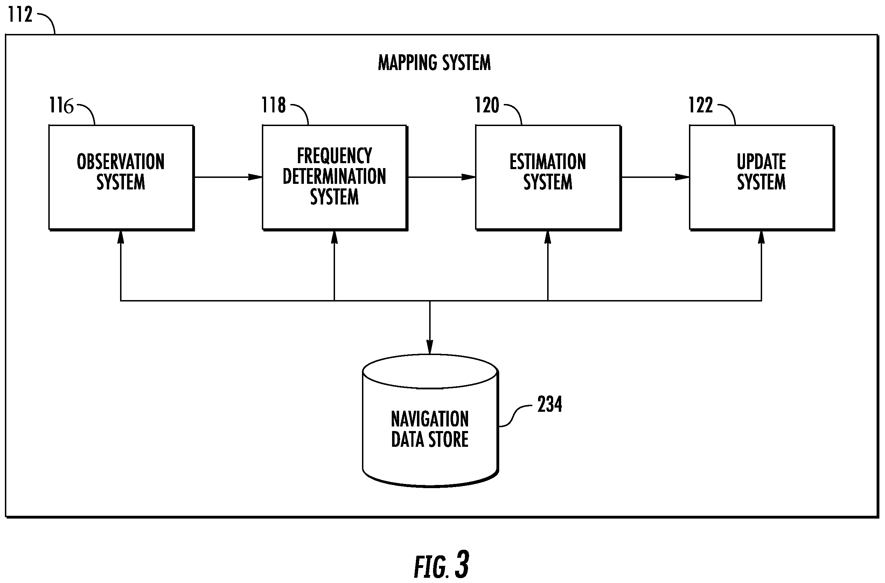

FIG. 3 illustrates an example mapping system 114 in accordance with example embodiments of the present disclosure. The mapping system 114 can include an observation system 116, a frequency determination system 118, an estimation system 120, and an update system 122.

In some examples, the observation system 116 can log each instance in which a feature in the geographic map data is observed. In some examples, observations can be generated based on object recognition data received from computing systems included in vehicles that have agreed to share data associated with objects identified in their local area. When an instance in which a feature is observed is received, the observation system 116 can strip the observations of user-identifying information. In some examples, the observation data can be stored as a series of records. The observation system 116 can access those records to determine when a feature in the geographic map data has been observed.

In some examples, the frequency determination system 118 can determine a frequency at which a particular feature in the geographic mapping data is observed. For example, the frequency determination system 118 can access information produced by the observation system 116 to determine how many times a particular object has been observed over a period of time. The total amount of time can be divided by the number of observations to determine a frequency at which the object is deserved. For example, if a respective feature (e.g., a construction sign) has been detected 12 times in the last month, the frequency determination system 118 can determine that the feature is observed about three times a week. In some examples, when new observations are received, the frequency determination system 118 can update the frequency at which the object is observed. Specific instances in which the object is observed may not be stored to ensure that the privacy of users is maintained.

The estimation system 120 can determine an estimated likelihood that a respected feature still exists based on the length of time since it has been observed and the frequency at which it was previously observed. For example, if the respective feature has been observed twice a day for three months, and has not been observed for over a week, the likelihood that it no longer exists is increased.

Once the estimation system 120 has generated an estimated likelihood value representing the likelihood that the feature still exists, the estimated likelihood value can be compared to a threshold likelihood value. If the estimated likelihood value is determined to be below the threshold likelihood value (e.g., the likelihood that the feature still exists is below a threshold value, such as 5%), the update system 122 can update the geographic map data to remove the feature. When a feature is removed from the geographic map data, the feature is no longer visible to users who view that map data and will not be considered when generating navigation routes.

The geographic data store 234 can store a variety of navigation data. For example, the geographic data store 234 can include map data. In some examples, the map data can include information describing locations, points of interest, buildings, roads, parks, signs, obstacles, and other geographic features. The map data can include information correlating addresses with specific geographic locations such that a user can input an address and information about that address (e.g., what buildings if any are at that location). Similarly, a user can enter the name of a location or point of interest and the system can identify the address associated with that location. The geographic data store 234 can include information associated with the size of roads and/or lanes, information about the visibility of signs along the route, information on the smoothness of a particular route, information about changes in elevation along a road, and so on.

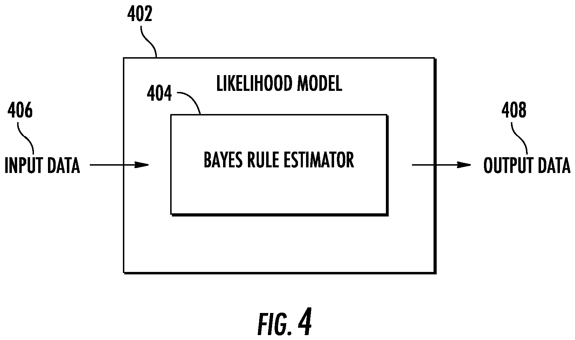

FIG. 4 depicts a block diagram of a model for estimating the likelihood that a particular feature in geographic map data still exists according to example embodiments of the present disclosure. A likelihood model 402 can include a Bayes rule estimator 404. The likelihood model 402 can be designed to receive a set of input data associated with a feature within geographic map data. **In** response to the receiving input data, the likelihood model 402 can provide output data that describes the likelihood that the feature still exists.

**In** some examples, the input can include information describing the frequency at which the feature is predicted to be observed and the amount of time since the last observation of the feature. The Bayes rule estimator 404 can, based on the expected observation frequency and the time since the last observation, estimate the likelihood of the feature still existing (e.g., the object has not been removed, changed, etc.). The output data 408 can be the estimated likelihood.

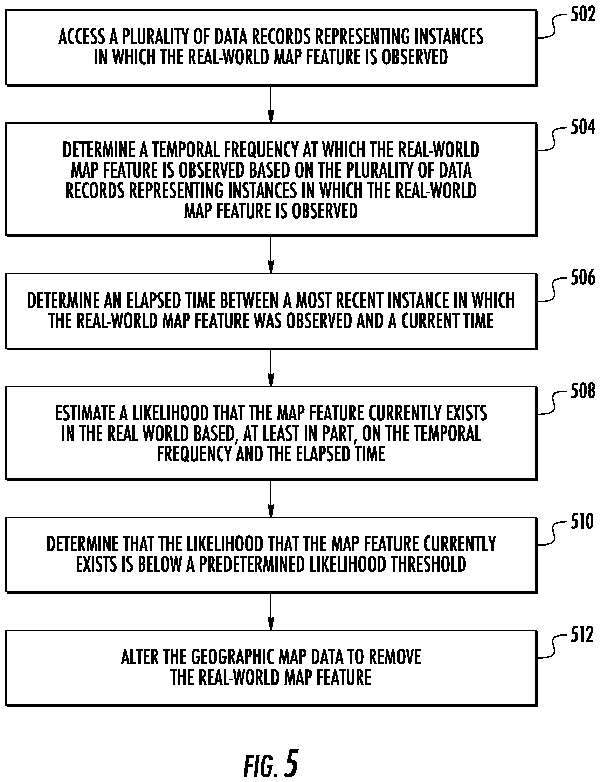

FIG. 5 depicts an example flow diagram for a method of estimating the likelihood that a map feature still exists in the real world according to example embodiments of the present disclosure. One or more portion(s) of the method can be implemented by one or more computing devices such as, for example, the computing devices described herein. Moreover, one or more portion(s) of the method can be implemented as an algorithm on the hardware components of the device(s) described herein. FIG. 5 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, and/or modified in various ways without deviating from the scope of the present disclosure. The method can be implemented by one or more computing devices, such as one or more of the computing devices depicted in FIGS. 1-3.

A computing system (e.g., computing system 100 in FIG. 1) can include one or more processors, memory, and other components that, together, enable the computing system to estimate the likelihood that a particular feature continues to exist. In some examples, the computing device is a portable computing device, such as a smartphone or tablet computer. The computing system can access, at 502, a plurality of data records representing instances in which the map feature is observed. In some examples, a respective data record representing an instance in which the map feature is observed is only collected after the data record has been anonymized.

In some examples, the computing system can, at 504, determine a frequency at which the map feature is observed based on the plurality of data records representing instances in which the map feature is observed. The map feature can be observed by analyzing sensor data captured by sensors included in vehicles. The sensors can include a camera or a LIDAR, and the sensor data is image data captured by the camera or LIDAR. In some examples, the frequency at which the map feature is observed is modeled as a Poisson process.

In some examples, the computing system can, at 506, determine an elapsed time between a most recent instance in which the map feature was observed and a current time. The computing system can, at 508, estimate a likelihood that the map feature currently exists in the real world based, at least in part, on the frequency and the elapsed time.

In some examples, the computing system can, at 508, determine that the likelihood that the map feature currently exists is below a predetermined likelihood threshold. The likelihood that the map feature currently exists can be determined using a Bayes rule model.

In some examples, the computing system can, at 510, alter the geographic map data to remove the map feature. In some examples, the computing system can designate feature data associated with the map feature to be hidden and not be displayed in publicly accessible geographic map data.

The technology discussed herein makes reference to sensors, servers, databases, software applications, and other computer-based systems, as well as actions taken, and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. The scope of the invention is defined by the appended claims.

**Claims**

1. A computer-implemented method for estimating a likelihood of a current existence of a real-world map feature, the method comprising:

   accessing (502), by a computing system (100) with one or more associated processors (102), a plurality of data records representing instances in which the real-world map feature is observed;
   the method being **characterised in that** it comprises the steps of:

   determining (504), by the computing system, a temporal frequency at which the real-world map feature is observed based on the plurality of data records representing instances in which the real-world map feature is observed;
   determining (506), by the computing system, an elapsed time between a most recent instance in which the real-world map feature was observed and a current time;
   estimating (508), by the computing system, a likelihood that the map feature currently exists in the real world based, at least in part, on the temporal frequency and the elapsed time;
   determining (508), by the computing system, that the likelihood that the map feature currently exists is below a predetermined likelihood threshold; and
   altering (510), by the computing system, geographic map data to remove the real-world map feature.

2. The computer-implemented method of claim 1, further comprising generating, by the computing system (100) and after altering (510) the geographic map data to remove the real-world map feature, navigation instructions based on the geographic map data.

3. The computer-implemented method of claim 1 or 2, wherein a real-world map feature is observed by analyzing sensor data captured by sensors (210) included in vehicles.

4. The computer-implemented method of claim 3, wherein the sensors (210) include a camera, and the sensor data is image data captured by the camera.

5. The computer-implemented method of any preceding claim, wherein a respective data record representing an instance in which the real-world map feature is observed is only collected after the data record has been anonymized.

6. The computer-implemented method of any preceding claim, wherein the temporal frequency at which the real-world map feature is observed is modeled as a Poisson process.

7. The computer-implemented method of claim 6, wherein the likelihood that the real-world map feature currently exists is determining using a Bayes rule model.

8. The computer-implemented method of any preceding claim, wherein altering (510), by the computing system, geographic map data to remove the real-world map feature further comprises:
designating, by the computing system, feature data associated with the real-world map feature to be hidden and not be displayed in publicly accessible geographic map data.

9. The computer-implemented method of any preceding claim, further comprising:

   initially storing, by the computing system (100), the plurality of data records in a log cluster; and
   preventing, by the computing system, the plurality of data records from being accessed until the plurality of data records have been anonymized.

10. A computing system (100), the computing system comprising:

   one or more processors (102),
   a non-transitory computer-readable memory (104); wherein the non-transitory computer-readable memory stores instructions that, when executed by the one or more processors, cause the computing system to perform the method of any preceding claim.

11. A computer-readable medium storing instructions that, when executed by one or more computing devices, cause the one or more computing devices to perform the method of any of claims 1 to 9.


**Patentansprüche**

1. Computerimplementiertes Verfahren zum Schätzen der Wahrscheinlichkeit einer aktuellen Existenz eines realen Kartenmerkmals, wobei das Verfahren Folgendes umfasst:

   Zugreifen (502) auf eine Vielzahl von Datensätzen, die Instanzen darstellen, in denen das reale Kartenmerkmal beobachtet wird, durch ein Rechensystem (100) mit einem oder mehreren zugeordneten Prozessoren (102);
   wobei das Verfahren **dadurch gekennzeichnet ist, dass** es die folgenden Schritte umfasst:

   Bestimmen (504) einer zeitlichen Frequenz, mit der das reale Kartenmerkmal beobachtet wird, durch das Rechensystem, basierend auf der Vielzahl von Datensätzen, die Instanzen darstellen, in denen das reale Kartenmerkmal beobachtet wird;
   Bestimmen (506) einer verstrichenen Zeit zwischen einer jüngsten Instanz, in der das reale Kartenmerkmal beobachtet wurde, und einer aktuellen Zeit durch das Rechensystem;
   Schätzen (508) einer Wahrscheinlichkeit, dass das Kartenmerkmal aktuell in der realen Welt existiert, basierend zumindest teilweise auf der zeitlichen Frequenz und der verstrichenen Zeit durch das Rechensystem;
   Bestimmen (508), dass die Wahrscheinlichkeit, dass das Kartenmerkmal aktuell existiert, unter einem vorbestimmten Wahrscheinlichkeitsschwellenwert liegt, durch das Rechensystem; und
   Ändern (510) von geografischen Kartendaten, um die reale Kartenfunktion zu entfernen, durch das Rechensystem.

2. Computerimplementiertes Verfahren nach Anspruch 1, ferner umfassend Erzeugen von Navigationsanweisungen basierend auf den geografischen Kartendaten durch das Rechensystem (100) und nach dem Ändern (510) der geografischen Kartendaten, um das reale Kartenmerkmal zu entfernen.

3. Computerimplementiertes Verfahren nach Anspruch 1 oder 2, wobei ein reales Kartenmerkmal durch Analysieren von Sensordaten beobachtet wird, die durch in Fahrzeugen beinhaltete Sensoren (210) aufgenommen werden.

4. Computerimplementiertes Verfahren nach Anspruch 3, wobei die Sensoren (210) eine Kamera beinhalten und die Sensordaten Bilddaten sind, die durch die Kamera aufgenommen werden.

5. Computerimplementiertes Verfahren nach einem der vorhergehenden Ansprüche, wobei ein jeweiliger Datensatz, der eine Instanz darstellt, in der das reale Kartenmerkmal beobachtet wird, erst gesammelt wird, nachdem der Datensatz anonymisiert wurde.

**6.** Computerimplementiertes Verfahren nach einem der vorhergehenden Ansprüche, wobei die zeitliche Frequenz, mit der das reale Kartenmerkmal beobachtet wird, als Poisson-Prozess modelliert wird.

**7.** Computerimplementiertes Verfahren nach Anspruch 6, wobei die Wahrscheinlichkeit, dass das reale Kartenmerkmal aktuell existiert, unter Verwendung eines Bayes-Regel-Modells bestimmt wird.

**8.** Computerimplementiertes Verfahren nach einem der vorhergehenden Ansprüche, wobei das Ändern (510) von geografischen Kartendaten durch das Rechensystem zum Entfernen des realen Kartenmerkmals ferner Folgendes umfasst:

Zuweisen von Merkmalsdaten, die dem zu verbergenden realen Kartenmerkmal zugeordnet sind, durch das Rechensystem, damit sie nicht in öffentlich zugänglichen geografischen Kartendaten angezeigt werden.

**9.** Computerimplementiertes Verfahren nach einem der vorstehenden Ansprüche, ferner umfassend:

initiales Speichern der Vielzahl von Datensätzen in einem Log-Cluster durch das Rechensystem (100); und Verhindern des Zugriffs auf die Vielzahl von Datensätzen durch das Rechensystem, bis die Vielzahl von Datensätzen anonymisiert wurde.

**10.** Rechensystem (100), wobei das Rechensystem Folgendes umfasst:

einen oder mehrere Prozessoren (102),
einen nichttransitorischen computerlesbaren Speicher (104);
wobei der nichttransitorische computerlesbare Speicher Anweisungen speichert, die, wenn sie durch den einen oder die mehreren Prozessoren ausgeführt werden, das Rechensystem veranlassen, das Verfahren nach einem der vorhergehenden Ansprüche durchzuführen.

**11.** Computerlesbares Medium, das Anweisungen speichert, die, wenn sie von einer oder mehreren Computervorrichtungen ausgeführt werden, die eine oder die mehreren Computervorrichtungen dazu veranlassen, das Verfahren nach einem der Ansprüche 1 bis 9 durchzuführen.

**Revendications**

**1.** Procédé mis en œuvre par ordinateur pour estimer la probabilité d'une existence actuelle d'une caractéristique de carte du monde réel, le procédé comprenant :

l'accès (502), par un système informatique (100) avec un ou plusieurs processeurs associés (102), à une pluralité d'enregistrements de données représentant des instances dans lesquelles la caractéristique de carte du monde réel est observée ;
le procédé étant **caractérisé en ce qu'**il comprend également les étapes suivantes :

la détermination (504), par le système informatique, d'une fréquence temporelle à laquelle la caractéristique de carte du monde réel est observée sur la base de la pluralité d'enregistrements de données représentant des instances dans lesquelles la caractéristique de carte du monde réel est observée ;
la détermination (506), par le système informatique, d'un temps écoulé entre une instance la plus récente dans laquelle la caractéristique de carte du monde réel a été observée et une heure actuelle ;
l'estimation (508), par le système informatique, d'une probabilité que la caractéristique de carte existe actuellement dans le monde réel sur la base, au moins en partie, de la fréquence temporelle et du temps écoulé ;
la détermination (508), par le système informatique, du fait que la probabilité que la caractéristique de carte existe actuellement est inférieure à un seuil de probabilité prédéterminé ; et
la modification (510), par le système informatique, de données de carte géographique pour supprimer la caractéristique de carte du monde réel.

**2.** Procédé mis en œuvre par ordinateur selon la revendication 1, comprenant également la génération, par le système informatique (100) et après modification (510) des données de carte géographique pour supprimer la caractéristique de carte du monde réel, d'instructions de navigation basées sur les données de carte géographique.

**3.** Procédé mis en œuvre par ordinateur selon la revendication 1 ou 2, dans lequel une caractéristique de carte du monde réel est observée en analysant des données de capteur capturées par des capteurs (210) inclus dans des véhicules.

**4.** Procédé mis en œuvre par ordinateur selon la revendication 3, dans lequel les capteurs (210) comportent une caméra, et les données de capteur sont des données d'image capturées par la caméra.

**5.** Procédé mis en œuvre par ordinateur selon une quelconque revendication précédente, dans lequel un enregistrement de données respectif représentant une instance dans laquelle la caractéristique de carte du monde réel est observée est uniquement collecté après que l'enregistrement de données a été anonymisé.

**6.** Procédé mis en œuvre par ordinateur selon une quelconque revendication précédente, dans lequel la fréquence temporelle à laquelle la caractéristique de carte du monde réel est observée est modélisée comme un processus de Poisson.

**7.** Procédé mis en œuvre par ordinateur selon la revendication 6, dans lequel la probabilité que la caractéristique de carte du monde réel existe actuellement est déterminée à l'aide d'un modèle de règle de Bayes.

**8.** Procédé mis en œuvre par ordinateur selon une quelconque revendication précédente, dans lequel la modification (510), par le système informatique, de données de carte géographique pour supprimer la caractéristique de carte du monde réel comprend également :
la désignation, par le système informatique, de données de caractéristiques associées à la caractéristique de carte du monde réel à masquer et à ne pas afficher dans les données de carte géographique accessibles au public.

**9.** Procédé mis en œuvre par ordinateur selon une quelconque revendication précédente, comprenant également :

le stockage initial, par le système informatique (100), de la pluralité d'enregistrements de données dans un groupe de journaux ; et
l'interdiction, par le système informatique, de l'accès à la pluralité d'enregistrements de données jusqu'à ce que la pluralité d'enregistrements de données aient été anonymisés.

**10.** Système informatique (100), le système informatique comprenant :

un ou plusieurs processeurs (102),
une mémoire non transitoire lisible par ordinateur (104) ;
dans lequel la mémoire non transitoire lisible par ordinateur stocke des instructions qui, lorsqu'elles sont exécutées par les un ou plusieurs processeurs, amènent le système informatique à réaliser le procédé selon une quelconque revendication précédente.

**11.** Support lisible par ordinateur stockant des instructions qui, lorsqu'elles sont exécutées par un ou plusieurs dispositifs informatiques, amènent les un ou plusieurs dispositifs informatiques à réaliser le procédé selon l'une quelconque des revendications 1 à 9.

COMPUTING SYSTEM — 100

PROCESSOR(S) — 102

MEMORY — 104

DATA — 106

INSTRUCTIONS — 108

RECEPTION SYSTEM — 110

NAVIGATION SYSTEM — 112

MAPPING SYSTEM — 144

OBSERVATION SYSTEM — 116

FREQUENCY DETERMINATION SYSTEM — 118

ESTIMATION SYSTEM — 120

UPDATE SYSTEM — 122

TRANSMISSION SYSTEM — 130

*FIG. 1*

200

USER COMPUTING SYSTEM — 202

SENSORS

NAVIGATION APPLICATION — 212

210

COMMUNICATION NETWORK — 220

222

FRONT END

INTERFACE SYSTEM(S)

APPLICATION LOGIC LAYER

MAPPING SYSTEM

NAVIGATION SYSTEM — 112

114

SERVER COMPUTING SYSTEM — 230

DATA LAYER

GEOGRAPHIC DATA STORE — 234

FIG. 2

*FIG. 3*

MAPPING SYSTEM 112

- 116 OBSERVATION SYSTEM
- 118 FREQUENCY DETERMINATION SYSTEM
- 120 ESTIMATION SYSTEM
- 122 UPDATE SYSTEM
- 234 NAVIGATION DATA STORE

*FIG. 4*

ACCESS A PLURALITY OF DATA RECORDS REPRESENTING INSTANCES IN WHICH THE REAL-WORLD MAP FEATURE IS OBSERVED — 502

DETERMINE A TEMPORAL FREQUENCY AT WHICH THE REAL-WORLD MAP FEATURE IS OBSERVED BASED ON THE PLURALITY OF DATA RECORDS REPRESENTING INSTANCES IN WHICH THE REAL-WORLD MAP FEATURE IS OBSERVED — 504

DETERMINE AN ELAPSED TIME BETWEEN A MOST RECENT INSTANCE IN WHICH THE REAL-WORLD MAP FEATURE WAS OBSERVED AND A CURRENT TIME — 506

ESTIMATE A LIKELIHOOD THAT THE MAP FEATURE CURRENTLY EXISTS IN THE REAL WORLD BASED, AT LEAST IN PART, ON THE TEMPORAL FREQUENCY AND THE ELAPSED TIME — 508

DETERMINE THAT THE LIKELIHOOD THAT THE MAP FEATURE CURRENTLY EXISTS IS BELOW A PREDETERMINED LIKELIHOOD THRESHOLD — 510

ALTER THE GEOGRAPHIC MAP DATA TO REMOVE THE REAL-WORLD MAP FEATURE — 512

*FIG. 5*

**EP 4 396 534 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020191591 A1
- WO 2020118545 A1
- US 2019051153 A1